# EUROPEAN PATENT APPLICATION

(11) **EP 1 624 588 A1**
(43) Date of publication of application: **08.02.2006**
(21) Application number: 03723371.5
(22) Date of filing: 14.05.2003
(51) Int. Cl.: H04B 1/38

(54) **PORTABLE RADIO**

(71) Applicant: MITSUBISHI DENKI KABUSHIKI KAISHA, Tokyo 100-8310 (JP)
(72) Inventor: Tanaka, Tetsuya, c/o Mitsubishi Denki K. K., Tokyo 100-8310 (JP)
(74) Representative: Sajda, Wolf E.
(86) International application number: PCT/JP2003/005990
(87) International publication number: WO 2004/102822

(57) **Abstract**

A mobile radio set includes: a first housing (2) and a second housing (3) including any of a transmitter circuit section, a receiver circuit section, and a radio circuit section; a flexible cable (11) providing a connection between a circuit section of the first housing (2) and a circuit section of the second housing (3); an antenna (4) that is electrically connected to the radio circuit section, and located at the end of the second housing (3) remote from the first housing (2); a bottom board cable (25) providing a connection between bottom boards of the first housing (2) and second housing (3); and a variable load (27) that is inserted in series in the bottom board cable (25). This mobile radio set automatically adjusts phases of the antenna depending on service conditions of the radio set, thereby enabling to assure a stable communication.

## Description

### Technical Field

The present invention relates to a mobile radio set such as cellular phone.

### Background Art

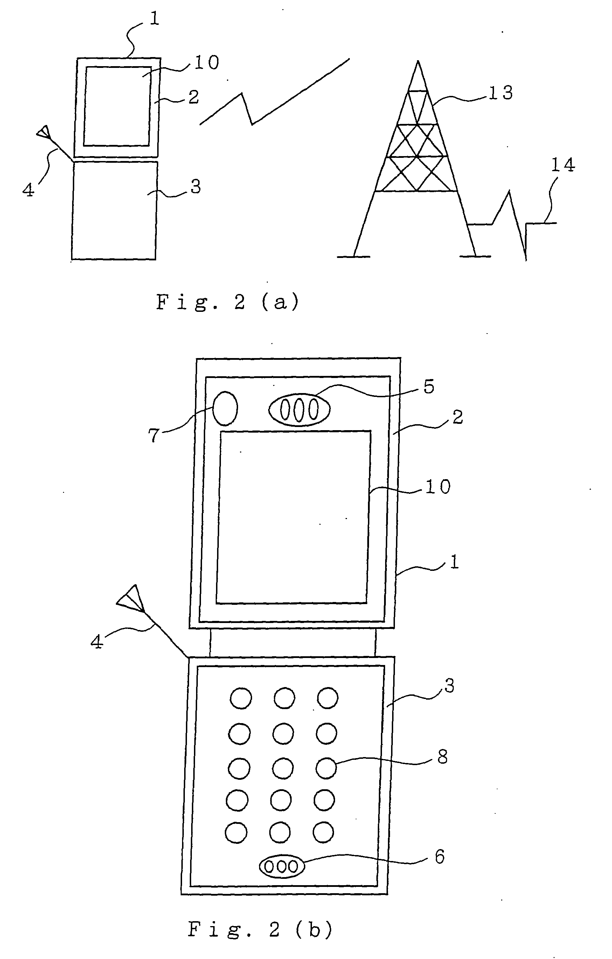

As shown in Fig. 2(a), generally a mobile radio set 1 (hereinafter referred to as radio set) possesses a communication function utilizing a telephone line 14 of a base station 13. Further, as shown in Figs. 2 (a) and (b), the radio set has a body formed of a first housing 2 and a second housing 3. In the front of the body, a receiver 5, a transmitter 6, a key section 8, a monitor 10, a buzzer 7 and the like are provided. Further, such a constitution makes it possible for the radio set to have a downsizing function for storage or handy-carrying, and to have gain hold function necessary and sufficient for communication with the base station 13 through an antenna 4.

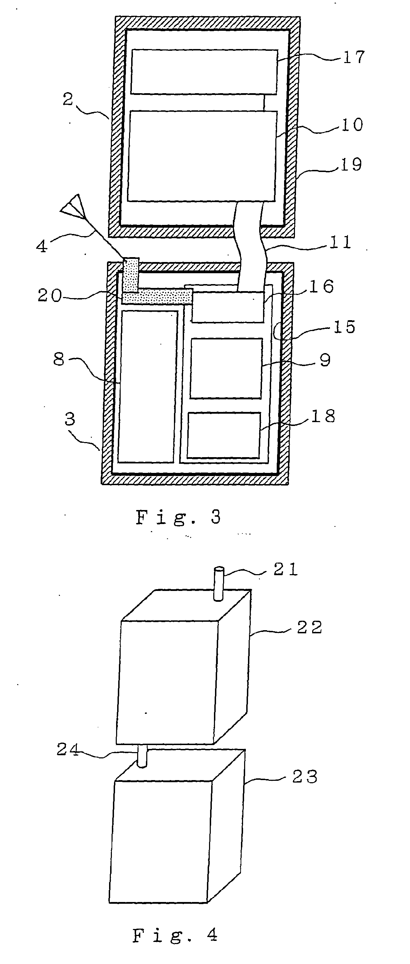

Fig. 3 is a view showing an internal part of a general radio set 1. In the first housing 2, a receiver circuit section 17 and the monitor 10 are accommodated. In the second housing 3, a radio section 16, a logic control section 9, a transmitter circuit section 18, the key section 8, and the antenna 4 connected from the radio section 16 via a connection terminal 20 are accommodated. A flexible cable 11 provides a connection between an electric circuit in the first housing 2 and an electric circuit in the second housing 3.

Each housing 2, 3 is composed of a metal hosing 15 on the inner side and a resin housing 19 covering it. The first housing 2 and the second housing 3 are connected together with, e.g., hinge to be flip-open type.

As configuration of the conventional antenna set, one is disclosed in the publication JP-A-31920/1994, and Fig. 4 is a schematic view thereof. The antenna set shown in Fig. 4 is constructed such that a main metal housing 22 and a sub metal housing 23 are connected together with a passive element 24, and a monopole antenna 21 is provided on the main metal hosing 22.

When the monopole antenna 21 is excited, a current is induced on the main metal housing 22 and the sub metal housing 23. In this case, by changing a state of the passive element 24, it is possible to control an electric potential of the main metal housing 22 and the sub metal housing 23, to change the distribution of a flowing current, and to bring an antenna pattern in a desired pattern.

On the other hand, thinking of a constitution of a radio set formed of two housings as shown in the above-mentioned Fig. 3, there are many cases where a battery, the radio circuit section 16, the logic control section 9 and the like are disposed in the second housing 3 on the lower side of the drawing, and the monitor 10 is disposed in the first housing 2 on the upper side. It requires about 40 to 80 lines in the flexible cable 11 to transmit display signals of the monitor 10. On the supposition that the construction of Fig. 4 is employed in the radio set constructed as shown in Fig. 3, it is disadvantageously necessary to locate passive elements 24 in all of the mentioned 40 to 80 lines respectively in order to change an antenna pattern.

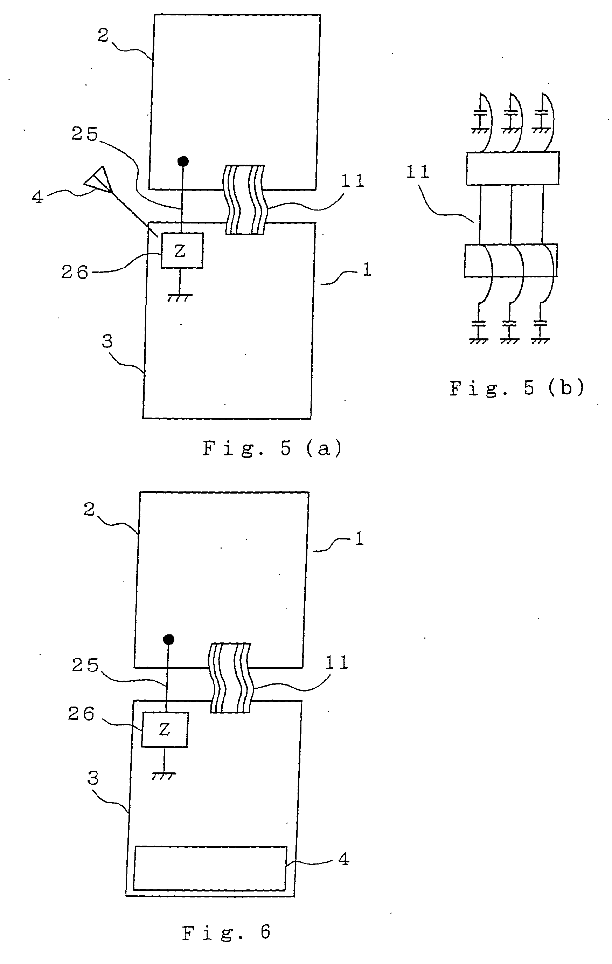

To overcome these disadvantages, in the radio set 1 formed of two housings that includes a number of lines of the flexible cable 11 of which equivalent circuit is shown in Fig. 5(b), a constitution of providing a bottom board cable 25 for connection between bottom boards (Gnd) of each housing as shown in Fig. 5(a) has been proposed to actualize a small-sized diversity antenna.

In the system shown in Fig. 2, generally at the time of requesting a call from the radio set 1, when a user performs a call request operation, i.e., inputs a telephone number with the key section 8, the radio set 1 communicates with the base station 13 for call request processing, and the radio set 1 is connected to a party intended to call on the telephone line 14 to be in the state of telephone call. On the other hand, at the time of an incoming call from the base station 13, an incoming call operation such as the sound of the buzzer 7 announcing the incoming is performed, thereafter the radio set 1 communicates with the base station 13 for incoming call processing, and one's own radio set is connected to a calling party on the telephone line 14 to be in the state of telephone call.

In the case where the antenna 4 that is fed with an electric power from the radio circuit section 16 of Fig. 3 is designed to be, e.g., λ/4 in length, it operates as a monopole antenna of approximately λ/4 in electric length. Further, the metal housing 15 of λ/4 in electric length that is insulated from hands of a user with the resin housing 19 acts as a bottom board of the antenna 4. In this manner, a radiation pattern corresponding to that of a λ/2 dipole antenna can be obtained as a whole.

Incidentally, in the case where the antenna 4 is located centrally proximate to the connection between the housings 2 and 3 as shown in Fig. 5, at the time of high frequency, an antenna performance is liable to be worse as shown in Table 1.

**Table 1: 2 GHz Band Antenna Characteristics**

| Location | | Lower Location | Central Location |
|---|---|---|---|
| Efficiency (dB) | | -2.9 | -4.6 |
| Call Time Gain | XPR=6(dB) | -6.4 | -7.8 |
| | XPR=0(dB) | -5.6 | -7.1 |

To cope with this, as shown in Fig. 6, by locating the antenna 4 at the end portion of the second housing 3 (a portion corresponding to a mouth at the time of opening and holding the radio set to one's ear) remote from the connection between the housings 2 and 3 (referred to as lower location), it is possible to reduce the deterioration of an antenna performance (refer to Table 1). However, in the case where a value of a load 26 that is connected in series with the bottom board cable 25 is fixed and cannot be changed, a frequency gives a profound effect on an antenna performance in the free space as shown in Table 2, and moreover current distribution of the housing itself has frequency characteristics. Therefore, the frequency characteristics are undesirably added to a difference in radiation characteristics between at the time of holding the radio set in one's hand and telephone calling and at the time of placing it in the free space.

**Table 2: Initial Verification**

| Frequency | | 810 MHz | 843 MHz | 885 MHz | 925 MHz | 958 MHz |
|---|---|---|---|---|---|---|
| Efficiency (dB) | Open | -6.3 | -2.6 | -2.9 | -2.4 | -2.6 |
| | Closed | -4.6 | -1.7 | -3.9 | -4.6 | -4.8 |
| Call Time Gain (dBd) C Hold Gain | | -14.9 | -11.0 | -12.9 | -13.9 | -13.8 |

Moreover, in the case of an antenna of the lower location, as compared with a centrally located antenna, it is possible to relatively reduce the change of characteristics when the housings are flip-open or closed. However, a problem exists in that an available band comes to be narrower, and all bands cannot be covered.

According to a verification result of Table 2 in the 800 MHz zone, a frequency range that meets requirement of -13dB of call time gain in the case where a load is set to be one fixed value is considered to be in a range of approximately 42 MHz (885 MHz to 843 MHz). To switch the value of the load 26 to a plurality of values, and to cover all frequency ranges in the 800 MHz zone, it becomes necessary to switch the value of the load 26 of the bottom board cable in not less than 4 ways.

### Disclosure of Invention

The present invention was made to solve the above-mentioned problems, and has an object of achieving a stable communication performance by obtaining a good antenna impedance state on a regular basis.

To achieve the above-mentioned object, a mobile radio set according to this invention, any of a transmitter circuit section, a receiver circuit section, and a radio circuit section is accommodated in either a first housing or a second housing. The first housing and the second housing are connected with a hinge so as to be openable and closable. The circuits accommodated in the first housing and the circuits accommodated in the second housing are connected together with a flexible cable.

An antenna is located at the end of the second housing remote from the first housing. A bottom board cable provides a connection between a bottom board of the first housing and a bottom board of the second housing. Further, a variable load capable of changing reactance component is inserted on the way of the bottom cable.

In response to the change in frequency range, open or closed state of the first and second housings, service conditions, e.g., whether or not a user holds the housings in one's hand, the variable load is adjusted to be a value having preliminarily been set, and the variation in antenna gain depending on service conditions is reduced.

### Brief Description of Drawings

Fig. 1 shows diagrams of an example of arrangement of a radio set (a), an equivalent circuit of a load for use in the radio set (b) and a circuit example of the load (c) according to the present invention.
Fig. 2 shows diagrams of a communication system of a general radio set (a) and that of the radio set (b).
Fig. 3 shows a diagram of an internal construction of the general radio set.
Fig. 4 shows a perspective view of a conventional radio set.
Fig. 5 shows diagrams of an arrangement of the conventional radio set (a), and an equivalent circuit of a flexible cable thereof (b).
Fig. 6 shows a diagram of an arrangement of the conventional radio set.

### Best Mode for Carrying Out the Invention

### Embodiment 1.

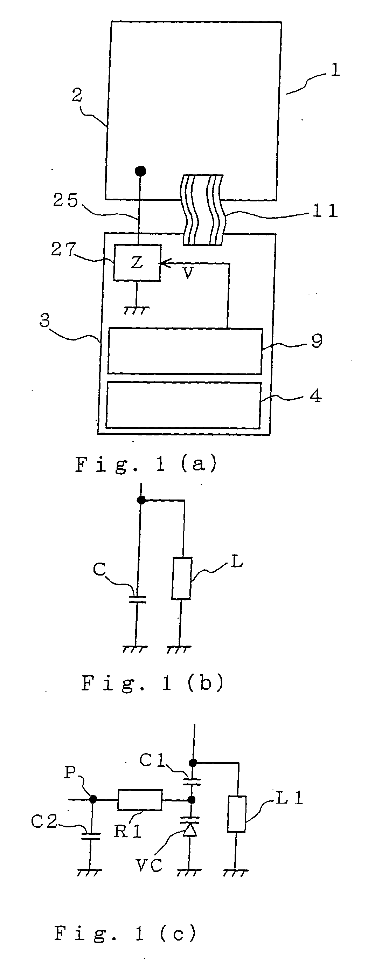

Fig. 1 shows schematic views of a radio set according to the present invention. A radio set 1 includes a first housing 2 and a second housing 3. The housing 2 and the housing 3 are connected together so as to be capable of flip-open or closed with, e.g., a hinge, not shown. As in Figs. 2 and 3, a transmitter, a monitor, a buzzer, and a receiver circuit section relative to these parts are provided in the first housing 2.

However, illustration thereof is omitted for the purpose of simplification. Likewise, a logic control section 9, an antenna 4 other than the above-mentioned parts are accommodated in the second housing 3. The antenna 4 is located at the lower portion of the second housing 3 (on the lower side of Fig. 1), that is, at the end of the second housing remote from the first housing 2, in other words, at the so-called mouth portion at the time of folding the housings.

Accordingly, the construction of the radio set shown in Fig. 1 is the same as that shown in Figs. 2 and 3 except for a layout position of the antenna 4 and the later-described circuit of a bottom board cable.

A flexible cable 11 is connected between the first housing 2 and the second housing 3 to provide a connection between electric circuits of each housing with a number of lines. Between the housing 2 and the housing 3, bottom boards (Gnd) of each housing are connected to each other with a bottom board cable 25. Further, a load 27 of a variable impedance value (Z) is inserted in series in this bottom board cable 25.

The radio set according to this invention is constructed such that the antenna 4 is located at the lower portion of the second housing 3. Further, bottom boards of the first housing 2 and the second housing 3 are connected together with a bottom board cable 25. A reactance component of the cable 25 is automatically changed in response to, e.g., change in high-frequency impedance of antenna due to the effect of a frequency at the time of using the radio set or due to being proximate to a human body, thereby causing antenna phase conditions to change. Changing phase conditions of the antenna changes a frequency band, whereby characteristics suitable for a frequency band will be acquired.

Now, the arrangement of changing a reactance component of the load 27, being a load part of the cable 25, is described. Fig. 1(b) shows an equivalent circuit of the load 27. Fig. 1(c) shows an example of actual circuit of the load 27.

With reference to Fig. 1(b), in the case of using an electrostatic capacity C of a chip and adjusting a reactance component of the load 27, supposing that coil L is of 47 nH, it is necessary for C to change from open to an extent of 0.5 pF so that a resonance is changed from 810 MHz to 958 MHz, being a frequency band in use.

This arrangement is feasible with an actual circuit of Fig. 1(c). A capacitor of 5pF and a varicap diode VC are connected in series. A coil L1 of 22 nH is connected in parallel with these capacitor and varicap diode. A resistance R1 of 47 kΩ is connected at a point of connection between the capacitor C1 and the varicap diode VC, and a capacitor C2 of 100 pF is connected to the other end of this resistance R1. A control voltage V is applied to a connection point P between the resistance R1 and the capacitor C2, thus causing a capacity of the varicap diode VC to change.

Now, capacities of the varicap diode VC are represented with C(0.5) and C(2.5) at the time of applying voltages to P point 0.5 V, 2.5 V, respectively. In the case of replacing the varicap diode VC with an electrostatic capacity C of the chip, C(0.5) = 3.0 pF to C(2.5) = 1.2 pF. A capacity value synthesized with C1 comes to be 1.9pF to 1.0pF under the conditions of V = 0.5 to 2.5. These synthesized capacity values are shifted from OPEN to 0.5 pF - equivalent with L1. As a result, a resonance of the load 27 obtained from the reactance component adjustment becomes not less than 958 MHz at 1.5 pF, and not more than 810 MHz at 4 pF to substantially match to a variable range of the varicap diode VC.

Consequently, a resonance of the bottom board cable 25 comes to be not less than 958 MHz at 1.5 pF and not more than 810 MHz at 4 pF to substantially match to a variable range of the varicap diode.

Furthermore, as a result of adjusting values of the load 27 at 810 MHz, 885 MHz, 958 MHz, matching resonance frequencies, and determining whether or not the same characteristics can be obtained, it was possible to reduce, as shown in Fig. 3, the change in characteristics due to frequency less than in the case of Fig. 2. It was also possible to further suppress a difference of characteristics due to opening or closing the housings.

**Table 3: Verification After Z Adjustment**

| Frequency | | 810 MHz | 843 MHz | 885 MHz | 925 MHz | 958 MHz |
|---|---|---|---|---|---|---|
| Efficiency (dB) | Open | -4.5 | - | -3.2 | - | -2.2 |
| | Closed | -3.8 | - | -2.1 | - | -2.3 |
| Call time gain (dBd) C hold gain | | -12.3 | - | -12.7 | - | -12.2 |

The control of a reactance component of the load 27 is executed by applying a control voltage V from the logic control section 9. At the logic control section 9, a generated control voltage with respect to a frequency to be used in the radio set has been preliminarily set. Thus, at the time of standby, applied voltage set conditions having been preliminarily set depending on a frequency to be used are reflected from the logic control section 9, the logic control section 9 automatically generates a control voltage in response to the change in the using frequency, adjusts a reactance component of the load 27, and causes a current distribution on the housings of the radio set to change, thereby achieving the optimum impedance conditions to change phase conditions of the antenna 4. The change in phase conditions causes bands to change, thereby enabling to acquire characteristics suitable for a using frequency.

### Embodiment 2.

In the case where an antenna performance is affected by, e.g., covering the antenna 4 with hands during telephone call, the fact of coming to be in the call state is detected at the logic control section 9, applied voltage set conditions of a call state having been preliminarily set depending on a frequency to be used are reflected on the load 27 of the bottom board cable 25 from the logic control section 9, and a current distribution on the housings of the radio set is changed, thereby bringing the antenna 4 in the optimum impedance conditions.

### Embodiment 3.

In the case where antenna characteristics are changed depending on the state of the housings being open or closed, it is detected at the logic control section 9 whether the housings are in an open state or in the closed state, applied voltage set conditions of an open or closed state having been preliminarily set depending on a frequency band are reflected on the load 27 of the bottom board cable 25 from the logic control section 9, and a current distribution on the housings of the radio set is changed, thereby bringing the antenna 4 into the optimum impedance conditions.

### Industrial Applicability

The present invention is applicable to a mobile radio set such as cellular phone.

## Claims

1. A mobile radio set comprising:
a first housing (2) and a second housing (3) including any of a transmitter circuit section, a receiver circuit section, and a radio circuit section; a flexible cable (11) providing a connection between a circuit section of said first housing (2) and a circuit section of said second housing (3);
an antenna (4) that is electrically connected to said radio circuit section, and is located at the end of said second housing (3) remote from said first housing (2);
a bottom board cable (25) providing a connection between bottom boards of said first housing (2) and second housing (3); and
a variable load (27) that is inserted in series in said bottom board cable (25).

2. The mobile radio set according to claim 1,
wherein a frequency to be used is detected, and a reactance component of said variable load (27) is changed depending on a detected frequency.

3. The mobile radio set according to claim 1,
wherein it is detected whether being in a standby state or a telephone call state, and a reactance components of said variable load (27) is changed depending on a detected state.

4. The mobile radio set according to claim 1,
wherein said first housing (2) and second housing (3) can be flip-open or closed, it is detected whether or not said housings are in an open state or in a closed state, and a reactance component of said variable load (27) is changed depending on a detected state.

5. The mobile radio set according to any one of claims 1 to 4,
wherein an active element such as varicap diode is employed as said variable load (27).
